# EUROPEAN PATENT APPLICATION

(11) **EP 3 981 583 A1**
(43) Date of publication of application: **13.04.2022**
(21) Application number: 21201218.1
(22) Date of filing: 06.10.2021
(51) Int. Cl.: B29C 70/50, B23B 3/12, B28B 3/12

(54) **OVEN-PRESS OF INCONSISTENT MATERIAL**

(30) Priority: 09.10.2020 IT 202000023845
(71) Applicant: Technoplants S.R.L., 59100 Prato (IT)
(72) Inventor: GUALTIERI, MARCO, 59100 PRATO (IT)
(74) Representative: Firmati, Leonardo

(57) **Abstract**

Described is an oven-press of inconsistent material (M), comprising a first treatment unit (2) comprising a plurality (21) of first cylinders (20) configured to compress the material (M) and heating means (22) configured for heating the material (M), a second treatment unit (3) comprising a plurality (31) of second cylinders (30) configured for compressing the material (M), a first belt (4) moved along a feed direction (A) designed to transfer the material (M) from the first (2) to the second (3) treatment unit, and a second belt (5) moved along the feed direction (A).

## Description

This invention relates to an oven-press of inconsistent material.

The term oven-press means machinery which is able to heat and compress the material, suitable for example for forming panels or sheets of various material.

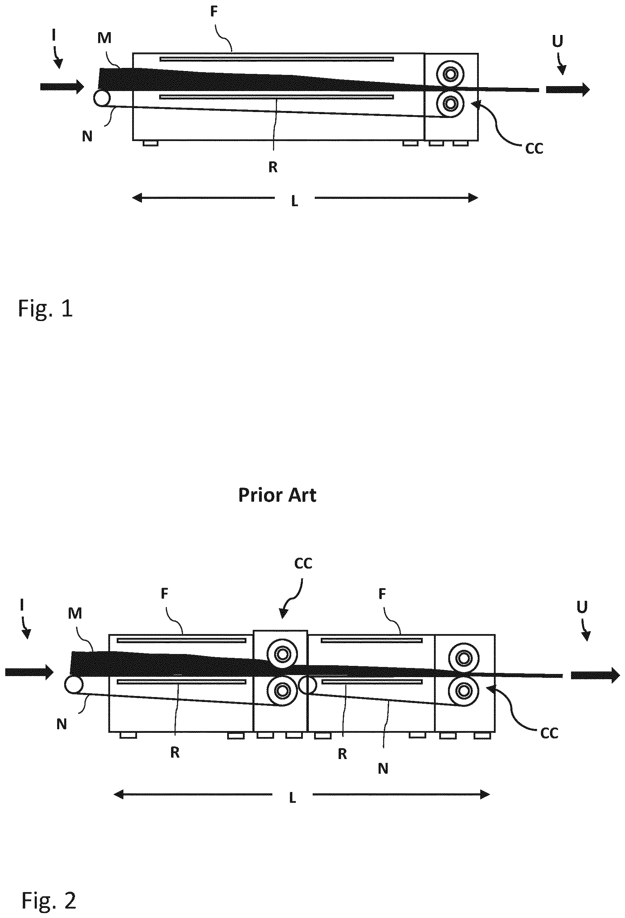

Prior art examples of oven-presses of inconsistent material are shown in Figures 1 and 2.

In particular, Figure 1 illustrates an oven-press equipped with a belt N for moving the material M from an infeed position I to an outfeed position U.

The material M passes through an oven F to be softened by heating elements R, and is then compressed by passing through a bending machine CC comprising two rotating cylinders.

One of the main disadvantages of these solutions is due to the fact that these oven-presses are large in size, especially in the direction of length L.

In fact, the material M must be completely softened before being subjected to compression, so very long ovens are necessary for continuously processing the material. Only with large ovens it is possible to bring the material to the correct consistency so that it can then be subjected to compression.

In fact, in the prior art ovens-presses, if the compression is applied when the material is not completely softened, the friction between the material M and the belt N prevents the movement of the belt, causing the causing the stoppage or even the breakage of the oven-press.

Another prior art solution is illustrated in Figure 2. Figure 2 shows by way of example an oven-press equipped with two or more belts N for moving the material M from an infeed position I to an outfeed position U.

The material M passes through a first oven F to be softened and is then compressed for the first time passing through a bending machine CC.

The process is then repeated by making the material M pass through a second oven F to be further softened, after which the material M is compressed again, passing through a second bending machine CC.

In this way, the material M is softened in successive steps, and for each step it is compressed on the basis of the softening of the material.

Also, in this type of solution it is necessary to have large spaces, since the oven-press mainly extends longitudinally L.

In fact, even if the material is softened in successive steps, this must in any case be softened in every step, and the compression of the intermediate step slows down the softening of the next step, increasing the size of the oven.

Moreover, this solution has the disadvantage of requiring an adequate calibration of the bending machines CC based on the percentage of softening of the material M during the various steps.

This calibration is, however, not always simple to determine, especially if different materials are inserted in the oven-press with different softening temperatures.

The aim of the invention is therefore to provide an oven-press of inconsistent material.

Another aim is to provide an oven-press of inconsistent material with small dimensions.

Yet another aim is to provide an oven-press designed also for processing different materials.

A further aim is to provide an oven-press for the production of materials with a large range of thicknesses.

Yet another aim of the invention is to provide an oven-press which is flexible and adaptable to various requirements starting from inconsistent materials.

Another aim is to provide an oven-press such that it is possible to have a greater control on the temperature of the material M during the passage in the oven-press and on the thickness of the material M feeding out of the oven-press.

Yet another aim of the invention is to provide an oven-press which is practical to use starting from inconsistent materials.

According to the invention, these aims and others are achieved by an oven-press of inconsistent material comprising the technical features described in the accompanying claims.

The technical features of the invention, with reference to the above-mentioned aims, are clearly described in the appended claims and its advantages are apparent from the detailed description which follows, with reference to the accompanying drawings which illustrate purely non-limiting example embodiments of the invention, in which:
- Figure 1 shows a first oven-press according to the prior art;
- Figure 2 shows a second oven-press according to the prior art;
- Figure 3 is a schematic side elevation view of a first embodiment of the oven-press of inconsistent material according to the present invention;
- Figure 4 is a schematic side elevation view of a second embodiment of the oven-press of inconsistent material according to the present invention;
- Figure 5 is a schematic side elevation view of a third embodiment of the oven-press of inconsistent material according to the present invention;
- Figure 6 is a schematic side elevation view of a fourth embodiment of the oven-press of inconsistent material according to the present invention;
- Figure 7 is a schematic side elevation view of a detail of the oven-press of inconsistent material according to the present invention;
   Figure 8 is a schematic side elevation view of a further embodiment of the detail of Figure 7;
- Figure 9 is a schematic side elevation view of a cross section of a fifth embodiment of the oven-press of inconsistent material according to the present invention;
- Figure 10 is a schematic side elevation view of a different cross section of the oven-press of inconsistent material of Figure 9;
- Figure 11 is a schematic side elevation view of a different cross section of the oven-press of inconsistent material of Figure 9;
- Figure 12 is a schematic side elevation view of a sixth embodiment in a first configuration of use of the oven-press of inconsistent material according to the present invention;
- Figure 13 is a schematic side elevation view of the oven-press of inconsistent material of Figure 12 in a second configuration of use;
- Figure 14 is a schematic side elevation view of the oven-press of inconsistent material of Figure 12 in a third configuration of use.

The term "inconsistent materials" is used generically to mean products of any kind in the form of grains or pellets.

Inconsistent materials comprise, for example, fibre-based pelletized products, plastic-based materials, plastic residues, padding, wadding or felts, insulating panels, wood residues, fabrics, or pelletized products which can be softened with heat, whether they are waste or virgin materials.

The term "fibre" means materials both of a natural type, such as air-lay, wool, jute, kenaf, cotton and the like, and of a synthetic type, such as, for example, non-woven fabric (NWF), or regenerated fibres.

Advantageously, the inconsistent materials suitable for the purposes of the invention soften at a temperature of less than 300°C.

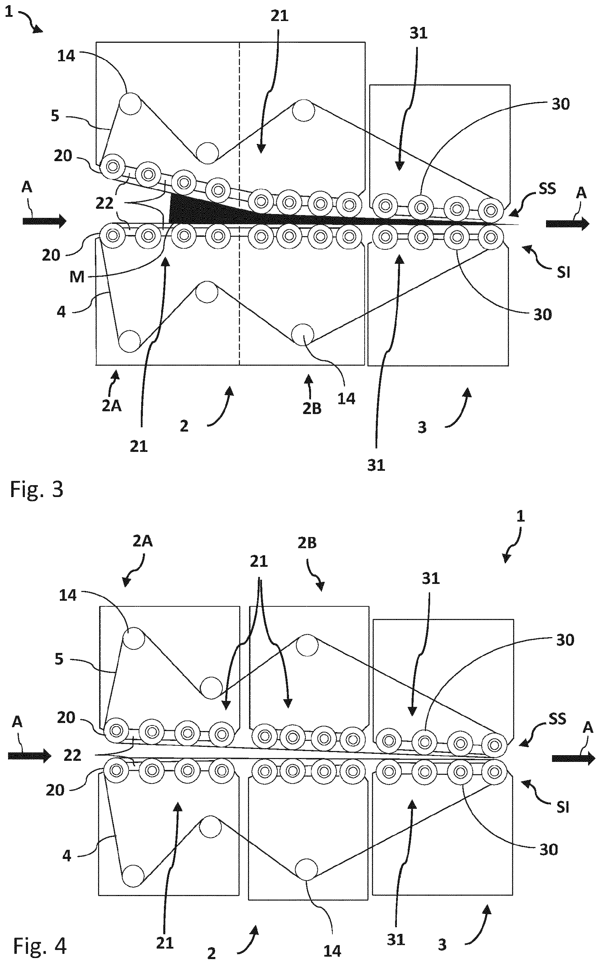

With reference to Figures 3 to 14, the numeral 1 denotes in its entirety an oven-press of inconsistent material M, made in accordance with the invention.

In Figure 3 the inconsistent material M, hereinafter also referred to simply as material M, is illustrated inside part of the oven-press 1 for simplicity, whilst in Figures 4 to 14 the material M is not illustrated. The oven-press 1 comprises a first treatment unit 2, a second treatment unit 3, a first 4 belt and a second belt 5.

More specifically, the first treatment unit 2 comprises a plurality 21 of first cylinders 20 for compressing the material M.

Moreover, the first treatment unit 2 comprises heating means 22 for heating the material M.

In this way, the first treatment unit heats and compresses the material M continuously.

The second treatment unit 3 comprises a plurality 31 of second cylinders 30 for compressing the material M.

The plurality of first cylinders 21 and the plurality of second cylinders 31 are positioned below and above the material M, as illustrated in Figure 3.

The cylinders 20, 30 positioned below the material M define a lower series SI.

Whilst the cylinders 20, 30 positioned above the material M define an upper series SS, as illustrated in Figures 3 to 6 and from 9 to 14.

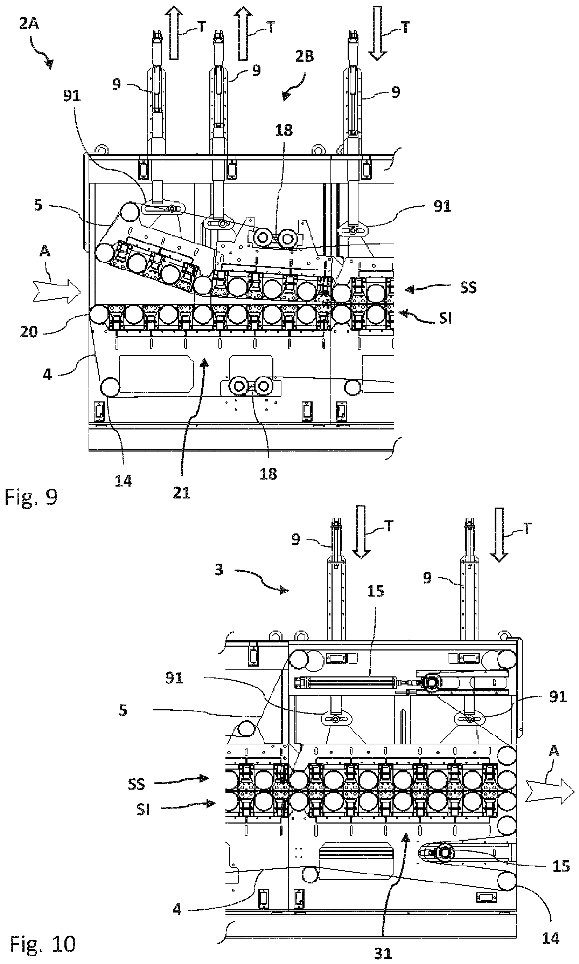

The plurality of first cylinders 21 and second 31 cylinders impart a compression to the material M with a translational or rotational movement, or a combination of them, along a plane at right angles to the feed direction A, as illustrated in more detail in Figures 9 to 14.

With reference to Figures 9 to 14, actuating means 9 translate the plurality of first cylinder 21 and second cylinders 31 along the direction T.

The translation T for the first 2 and the second 3 unit is varied according to the various requirements.

In fact, by providing two or more actuators 9 it is possible to vary the height of the upper series SS, of the lower series SI or of both.

Moreover, with two or more actuators 9, at least one for each first treatment unit 2 and second treatment unit 3, it is possible to vary the height of the cylinders 20, 30 of each treatment unit.

In that way, the compression applied to the material M by the cylinders 20, 30 is varied and consequently the thickness of the material M fed out of the oven-press 1 is varied.

These solutions are particularly advantageous during calibration of the oven-press 1 for processing the material M.

The actuating means 9 comprise rotation elements for rotating the cylinders 20, 30 in a plane at right angles to the feed direction A.

The rotation elements comprise, for example, hinges or slots 91 in which a pin slides.

Figures 9 and 10 illustrate the use of slots 91 for rotating the plurality of first 21 and second 31 cylinders.

The first belt 4 is moved along a feed direction A for transferring the material M from the first treatment unit 2 to the second treatment unit 3.

The first belt 4 is looped around the lower series SI. The second belt 5 is also moved along the feed direction A.

Moreover, the second belt 5 is closed in a loop around the upper series SS.

For this reason, the plurality of first 21 and second 31 cylinders counter-rotate in order to favour the movement of the first belt 4 and of the second 5 belt in the feed direction A.

The first belt 4 and the second belt 5 are advantageously closed in a loop and made in a single strip to prevent discontinuities forming in the material M or surface imperfections, such as folds, marks or impressions in the finished product, which would occur if there had been joints in the belt.

According to embodiments not illustrated, where the quality of the material M is not a priority parameter of interest, the first belt 4 and the second belt 5 are made in several parts, then joined together.

The first and second cylinders 20, 30 transmit a drive force FM to at least one between the first belt 4 and the second belt 5.

In fact, the oven-press 1 according to the invention is such that the driving force FM produced by at least one motor 8 is transferred to the cylinders 20 and 30.

That is to say, the cylinders 20 and 30 drive at least one between the first belt 4 and the second belt 5, thus moving it.

According to embodiments not illustrated, the cylinders 20 and 30 push at least one between the first belt 4 and the second belt 5, thus putting it in motion.

The motor 8 transfers the drive force FM to the cylinders 20 and 30 due to transmission means 16.

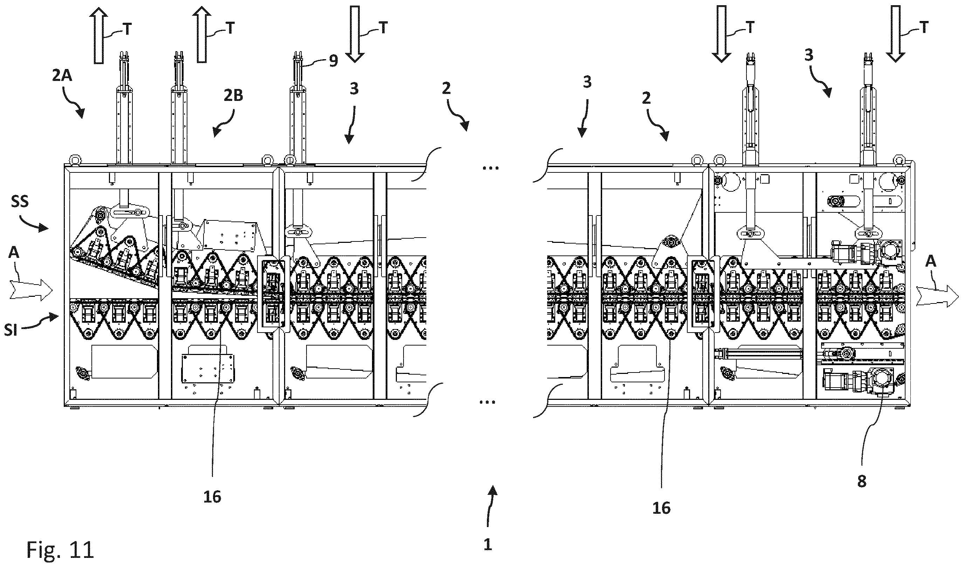

With reference to Figure 11, the transmission means are in the form of belts 16, which are oriented or not oriented.

According to embodiments not illustrated, the belts 16 are replaced by chains which have the advantage of reducing, and even eliminating, the slipping of the transmission means.

In this way, the cylinders 20 and 30 are active, that is to say, pulling.

According to embodiments not illustrated the cylinders 20, 30 are pushing.

This allows a longer service life of the first belt 4, or of the second belt 5, or of both, compared with the prior art oven-presses, since they are less subjected to stresses which may result in machine blockages and stoppages.

In fact, the oven-press according to the invention has the advantage of compressing the material M, without the oven-press 1 undergoing blockages or breakages of the first belt 4 or the second belt 5, even when the material M has not been completely softened.

Advantageously, the material M may be compressed simultaneously with the heating of the material M starting from the infeed into the oven-press 1.

The driving force transmitted to the cylinders 20, 30 allows the material M to be fed, whilst it is compressed, without interruptions or stoppages of the oven-press 1. Moreover, according to embodiments where the first belt 4, the second belt 5, or both, are heated, the time for softening the material M is reduced, and the efficiency of the oven-press 1 is increased.

Moreover, for some types of material M, the compression of the material M contributes to an increase in the temperature of the material M, and therefore the further compression of the material is favoured.

Thanks to the fact that the material M is softened more quickly, the longitudinal dimensions L of the oven-press 1 are reduced.

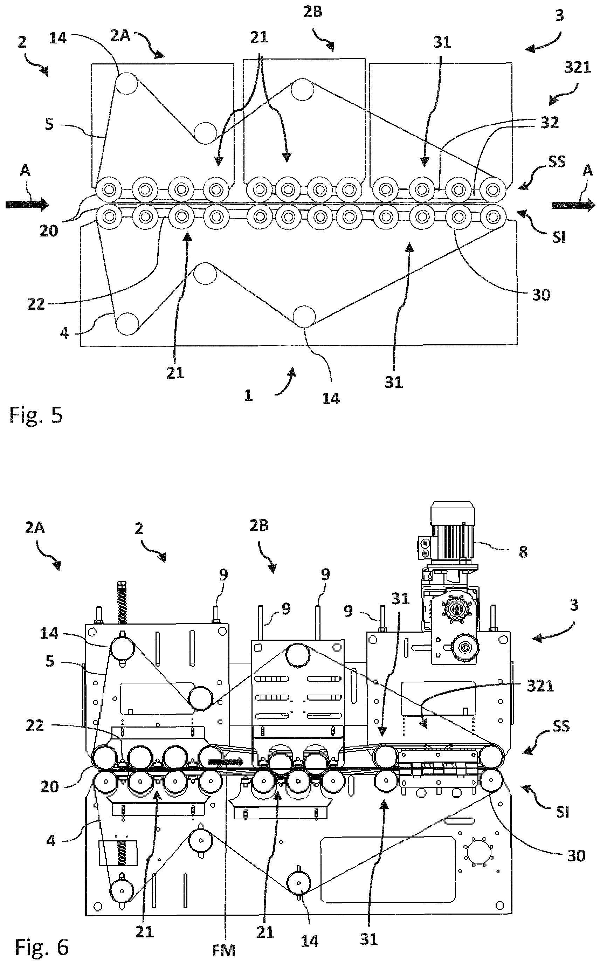

With reference to Figures 6 and 11, the oven-press 1 is powered by a single motor 8.

According to embodiments not illustrated, the oven-press 1 is powered by two or more motors 8.

For example, according to modular embodiments, not illustrated, the oven-press has a motor for each first treatment unit 2 and second treatment unit 3.

This allows a greater versatility of the oven-press 1. According to other embodiments not illustrated, at least part of the cylinders 20, 30 are motor-driven independently from each other.

These solutions are preferable for materials which are particularly adherent to the first belt 4, to the second belt 5 or adherent to both the belts.

With reference to Figures 3 to 14, the plurality 21 of first cylinders and the plurality 31 of second cylinders transmit a drive force FM to the first belt 4 and to the second belt 5.

In these solutions, the efficiency of the machine is improved, since both the belts, the first belt 4 and the second belt 5 are moved in such a way as to stress the material M on opposite surfaces.

If a material M is to be produced with different characteristics on the surfaces exposed to the first belt 4 and to the second belt 5, the speeds of the two belts are varied.

According to embodiments not illustrated, the heating means 22 are positioned inside the first treatment unit 2.

More specifically, in these solutions the heating means 22 are positioned in air.

For these embodiments, heating coils, heating plates, diathermic oil resistors, quartz tube resistors or infrared lamps define the heating means 22.

The term air heating means in air 22 means that the heat is transferred from the heating means 22 to the material M by irradiation.

These solutions are advantageous, for example, when the softening temperature of the material M is relatively low, advantageously less than 60°C.

In fact, for higher softening temperatures the material M would change colour, becoming browned.

Moreover, for higher temperatures the heating elements in air are more easily oxidised or tend to burn.

For softening temperatures greater than 60°C, so as not to adversely affect the properties of the material M, heating by conduction is advantageously used.

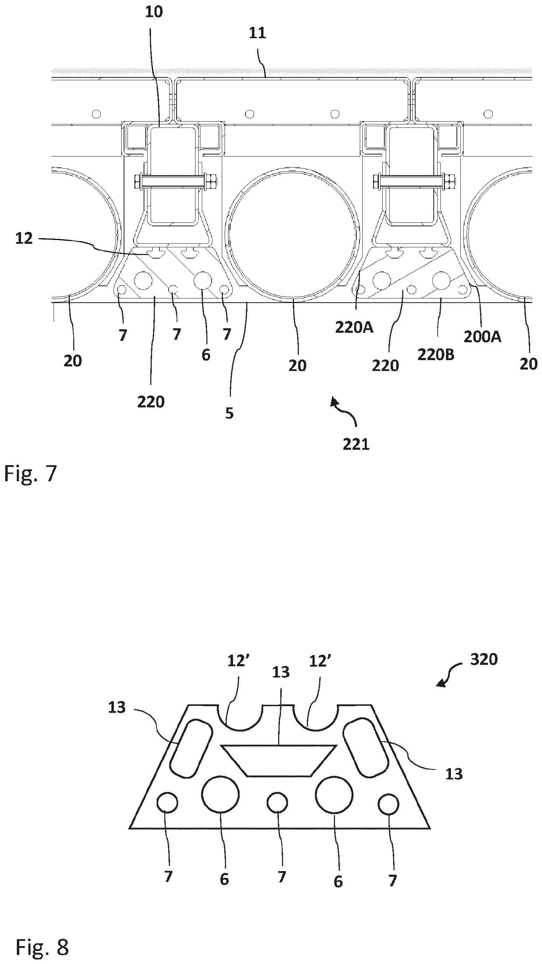

In these solutions, the heating means 22 comprise a plurality 221 of plates 220 for heating at least one between the first belt 4 and the second belt 5, as illustrated in Figure 7.

That is to say, the plates 220 heat by conduction at least one between the first belt 4 and the second belt 5.

The material M is then heated by conduction being in contact with at least one between the first belt 4 and the second belt 5.

For these solutions, that is to say, which comprise the use of plates which heat the first belt 4, the second belt 5 or both the belts, the material M is heated more quickly, thus improving the effectiveness of the oven-press 1.

At least one between the first belt 4 and the second 5 belt is made of thermally conductive material to allow the transfer of heat from the heating means 22 to the material M.

According to embodiments not illustrated, only one between the first belt 4 and the second belt 5 is made of thermally conductive material to allow the transfer of heat from the heating means 22 to the material M. These solutions are, for example, advantageous if the material M is to be smoothed on a lower or upper surface and, consequently, only one of the belts 4 or 5 is activated, depending on the surface of interest.

For example, if the lower surface of the material M is to be smoothed, the belt 4 is heated.

In this way, the lower surface of the material M in contact with the belt 4 is softened.

The compression then applied by the cylinders 20, 30 renders uniform the lower surface of the material M in contact with the belt 4.

This solution with the heating of a single belt is advantageous if two different materials are to be coupled.

In these solutions, the surface of the material M which is heated in contact with the belt is the one on which the second material is moved towards, and thus coupled. Materials which are suitable for making the belts 4 and 5, when they are thermally conductive, are, for example, Teflon, metal or metal-based materials, advantageously flexible or made from sheets.

With reference to Figures 3 to 14, both the belts 4 and 5 are made of thermally conductive material to allow the transfer of heat from the heating means 22 to the material M.

With reference to Figures 5 and 6, the second treatment unit 3 comprises means 32 for cooling the material M. In that way, cooling the material M before it leaves the oven-press improves, for example, the seal and the stability of the product made.

The cooling means 32 comprise a plurality 321 of plates 320 configured to cool at least one between the first belt 4 and the second belt 5.

For this reason, when the first belt 4 and the second belt 5, or both the belts, are made of a thermally conductive material, this favours the transfer of temperature from the cooling means 32 to the material M, or alternatively the removal of heat from the material M.

Figures 7 and 8 illustrate two embodiments of the plates 220 and 320 placed in contact with the belt 5.

More specifically, each plate 220, 320 is inserted in the space between two adjacent cylinders (20, 30).

Each plate 220, 320 is fixed as means 12 of coupling to a support 10 of the plate.

The coupling means 12 are of the removable type in such a way as to allow easy maintenance of the plates.

With reference to Figures 7 and 8, the coupling means 12 are made in the form of a snap fitting between the support 10 of the plate and the coupling seats 12'.

The support 10 of the plate is then connected to the frame 11 of the oven-press 1 in such a way as to be integral with the oven-press.

The heating means 22 and the cooling means 32 comprise at least one housing 6 for containing fluids selected between heating and cooling fluids and at least one housing 7 to contain electrical resistors.

Heating fluids comprise gases, such as, for example, air or burnt gases, or liquids such as, for example, diathermic oil, water or waste water from previous processing operations.

Cooling fluids comprise gas, such as, for example, air or liquids such as water or drainage water from previous processing operations.

More specifically, with reference to Figure 7, according to particular embodiments the housings 7 contain electrical resistors, whilst the housings 6 remain unused.

According to other embodiments, the housings 6 contain heating fluids, such as, for example, diathermic oil, whilst the housings 7 remain unused.

In this way, with a single plate it is possible to adapt the oven-press to different situations and temperature ranges.

According to other embodiments not illustrated, both the housings 6 and 7 are used to contain heating fluid means or elements of another type.

With reference to Figure 8, in particular embodiments the housings 6 contain cooling fluids, whilst the housings 7 remain unused.

In this case, too, the application of cooling fluids in one or more housings depends on the temperature and the degree of cooling required for processing the material M.

The elements 13 represent lightening in the plate 320.

These lightenings 13 not only reduce the weight of the plates but also increase the heat exchange surface area, improving the efficiency and heat transfer of the plates 320.

According to embodiments not illustrated, the lightenings 13 are also provided for the plurality 221 of plates 220.

With reference to Figures 7 and 8, the plates 220 and 320 have a trapezoidal cross-section.

This embodiment advantageously makes it possible to heat both the belt 4, 5 and the adjacent cylinders 20, 30. As illustrated in Figure 7, the oblique surfaces 220A mainly heat the cylinders 20 by conduction, and the surface 220B mainly heats the belt 5 by conduction. Heating both the belt and the cylinders increases the efficiency of the oven-press 1.

That is to say, the processing speed of the material M is increased and the dimensions of the oven-press 1 so that the material M is softened are reduced. Advantageously, the plates 220, 320 of the heating means 22 and of the cooling means 32 are removable.

In that way it is possible to replace one plate at a time when required.

The fact of having separate plates also has the advantage of being able to vary the temperature inside the oven-press along the extension of the oven-press or in an immediate fashion.

Doors, not illustrated, located on opposite sides along the length of the oven-press 1 are useful for accessing the plates 220, 320 and carrying out their maintenance, or the maintenance of the belts 4, 5.

With reference to Figures 3, 9, 11 and 12, the first treatment unit 2 comprises a first 2A and a second 2B sub-unit.

The first 2A and the second 2B sub-units move relative to each other in such a way that at least one between the first belt 4 and the second belt 5 undergoes a translation, a rotation, or a combination of them along a plane at right angles to the feed direction A.

These solutions are advantageous to favour the infeed of the material M into the oven-press and to gradually compress the material M.

With reference to Figure 6, some of the cylinders 20, 30 of the lower series SI and the cylinders 20, 30 of the upper series SS are at least partly offset along the feed direction A to increase the compression on the material M.

In this way, the material M is forced to perform a sort of S which increases the compression to which the material M is subjected.

These solutions are preferable when it is necessary to make materials M with thicknesses at the outfeed from the oven-press which are very small, advantageously less than 1 mm.

According to embodiments not illustrated, there are three offset cylinders 20, 30: two of the lower series SI and one of the upper series SS, or vice versa.

The three cylinders are advantageously arranged in the section of the oven-press close to the outfeed of the material M, to perform a final finishing compression, especially when the aligned cylinders do not allow the desired thicknesses to be reached.

At least one between the first treatment unit 2 and the second treatment unit 3 comprises means 15 for adjusting the tension of at least one between the first belt 4 and the second belt 5.

With reference to Figure 10, both the first belt 4 and the second belt 5 have tension adjustment means 15.

The tension adjustment means 15 are particularly useful in situations where the belts 4, 5 are replaced, so that they can be easily brought back into operation.

Means 15 for adjusting the tension are, for example, in the form of a piston and a cylinder.

Further rollers 14 are provided to facilitate the movement of the first belt 4 and of the second belt 5. The rollers 14 are also advantageous for adjusting the tension of the respective belt.

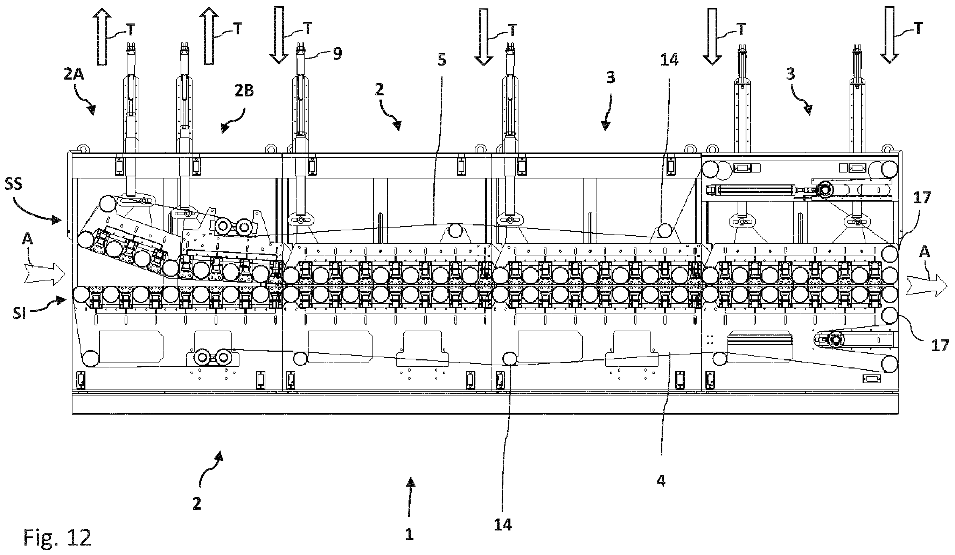

With reference to Figures 12 to 14, pulling cylinders 17 are provided to favour the escape of the material M from the last treatment unit of the oven-press 1.

With reference to Figure 9, at least one of either the first 2 or the second 3 treatment unit comprises means 18 for centring at least one between the first belt 4 and the second belt 5.

In fact, during use, the belt 4, 5 loses its seat or tends to slide laterally relative to the feed direction, thus compromising the integrity of the belt.

Centring means 18, advantageously comprising detection photocells, overcome the problem of sliding of the belt 4, 5.

One of the advantages of the oven-press according to the invention is the high modularity.

In fact, depending on the different processing requirements it is possible to combine, adding or removing one or more treatment units 2, 3.

Processing requirements are, for example, different thicknesses of the material M to be made, speed of processing or variation of the materials M.

Figures 3 to 14 therefore illustrate various embodiments, for example different possible modularities, even though not exhaustive.

More specifically, Figure 3 shows a first embodiment of the oven-press 1 with a first treatment unit 2 comprising two sub-units 2A, 2B and a second treatment unit 3.

Figure 4 shows a second embodiment with a first treatment unit 2 comprising two separate sub-units 2A, 2B, to increase the versatility of movement of the cylinders 20, 30 and a second treatment unit 3.

In both these two solutions, both the lower series SI of cylinders and the upper series SS are movable.

That is to say, both the first belt 4 and the second belt 5 can undergo as necessary a translation, a rotation, or a combination thereof, in a plane at right angles to the feed direction A.

This translation, rotation, or combination thereof, is due to the movement of the different treatment units 2, 3 or the sub-units 2A, 2B.

Figure 5 shows a third embodiment wherein the lower series SI of cylinders remains fixed, whilst the upper series SS is movable.

The term "movable" means that the upper series SS of cylinders can be translated and/or rotated.

With reference to Figures 5 and 6, the oven-press has a first treatment unit 2 and a second treatment unit 3.

More specifically, with reference to Figure 6, which illustrates a fourth embodiment, the sub-unit 2B has offset cylinders 20, 30 to increase the compression of the material M.

Figures 9, 10 and 11 illustrate a more generic embodiment of the oven-press 1 wherein the first treatment unit 2 and the second treatment unit 3 are alternated and repeated several times.

More specifically, the first module is made with a first treatment unit 2 comprising two sub-units 2A, 2B. After that, the second treatment unit 3 and the first treatment unit 2 are repeated at regular intervals, to end with a second treatment unit 3.

These solutions are advantageous, for example, in the case of materials which have very low softening temperatures, because they tend to adhere to the belts and it is therefore preferable to alternate hot modules, that is to say, first treatment units 2, with colder modules, that is to say, second treatment units 3. Figures 12, 13 and 14 show a sixth embodiment wherein two first treatment units 2 are used followed by two second treatment units 3.

These solutions therefore provide a first hot module, an additional hot module, a cold module and an additional cold module.

These solutions are, for example, advantageous for the processing of inconsistent materials M of a textile nature.

Further embodiments, not illustrated, are provided. According to embodiments not illustrated, during its operation in the oven-press 1, in addition to the material M, an additive is advantageously inserted in order to keep together the inconsistent material M at the outfeed of the oven-press 1.

In use, the oven-press 1 adopts a first configuration, illustrated in Figure 12, wherein the material M, not illustrated, is loaded into the oven-press 1.

The differentiated opening between the various treatment units, like an infeed cone, favours the entrance of the material M and the continuous feeding of the first belt 4 and the second belt 5.

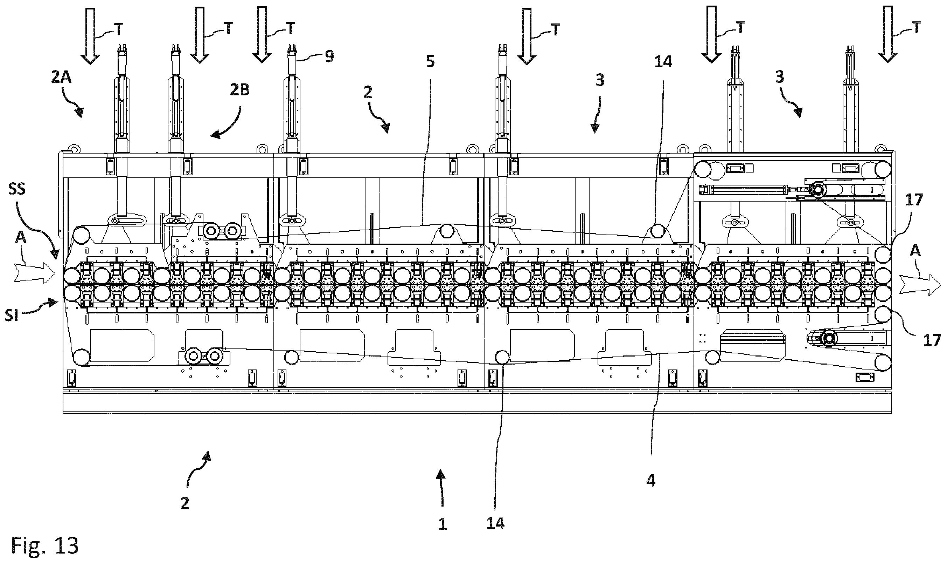

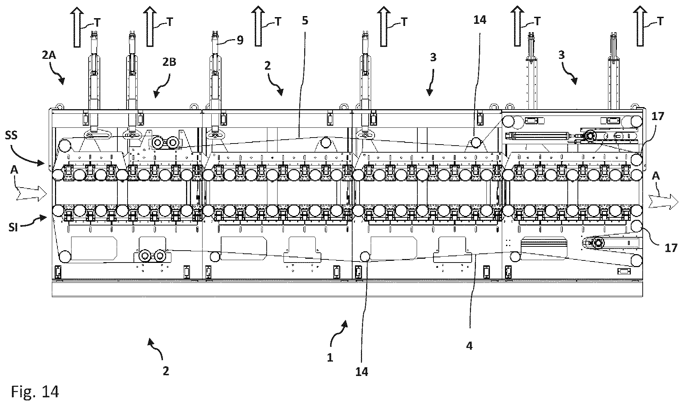

From the first configuration illustrated in Figure 12, the oven-press 1 moves to a second configuration illustrated in Figure 13, wherein the material M is compressed and heated in the first treatment units 2 and compressed and cooled in the second treatment units 3. From the second configuration illustrated in Figure 13, the oven-press 1 moves to a third configuration shown in Figure 14 wherein the upper series SS of cylinders is translated upwards along the direction T to favour the unloading of the material M.

According to embodiments not illustrated, the speed of the first belt 4 and of the second belt 5 the direction of the feed direction A of the belts 4, 5, or both, that is to say, speed and direction of the belts 4, 5, are different to each other.

These solutions are, for example, advantageous for processing the material M in which it is necessary to act on the orientation of the fibres of the material M. According to other embodiments not illustrated, the temperature of the first belt 4 and of the second belt 5 or of the single plates 220, 320 is different from each other.

These solutions are, for example, advantageous for producing materials M feeding out of the oven-press 1 with different surface characteristics on opposite sides of the material M in contact with the belts 4, 5.

For example, for the smoothing of the material M.

According to embodiments not illustrated, the oven-press 1 is switched on and off in a controlled manner. That is to say, it is possible to control, even remotely, the movement of the first belt 4 and of the second belt 5 and the temperature of the plurality 21 of first cylinders of the plurality of second cylinders 31, or of the individual plates 220 and 320.

These solutions are advantageous, for example, if, after switching off the heating means 22, the oven-press 1 is to be stopped.

The oven-press 1 advantageously reaches temperatures of between 60°C and 500°C inside the oven-press.

The immediate stopping of the belts 4, 5, before the environment in the oven-press has cooled, could adversely affect the condition of the belts 4, 5.

For this reason, especially during switching off of the oven-press 1, the first 4, the second 5 or both the belts continue to move until a safety temperature is reached in the oven-press 1 to protect the integrity of the belts 4, 5.

In this regard, a step in which the speed of movement of the belts 4, 5 is increased allows the heat to be dissipated more quickly, and consequently the belts 4, 5 and the environment inside the oven-press 1 are cooled more quickly.

Moreover, to make the cooling process even more effective during switching off of the oven-press 1, the cooling means 32, where present, are kept switched ON until reaching the safety temperature.

Further configurations and sequences of use, not illustrated, are imaginable.

The oven-press of inconsistent material according to the invention achieves the preset aims and brings important advantages.

A first advantage of the oven-press of inconsistent material according to the invention is the possibility of providing an oven-press with smaller dimensions than the prior art oven-presses.

Another advantage is due to the fact that with the oven-press according to the invention the efficiency of the oven-press is improved in relation to the speed and the products obtained during the processing.

Another advantage is due to the fact that the oven-press according to the invention has a high modularity, due to the possibility of combining in various ways the first 2 and the second 3 treatment units.

A further advantage is due to the fact that the oven-press according to the invention is suitable for processing different materials, even with different softening temperatures.

A further advantage is the possibility of producing materials with a wide range of thicknesses. For example, with the oven-press according to the invention it is possible to produce materials with thicknesses at the outfeed from the oven-press 1 of between 0.1 mm and 300 mm.

Another advantage is due to the fact that with the oven-press according to the invention it is possible to have a greater control on the temperature of the material M during the passage in the oven-press and on the thickness of the material M coming out of the oven-press.

Yet another advantage is the possibility of providing an oven-press which is flexible and adaptable to various requirements for use starting from inconsistent materials, even of different types.

Another advantage is due to the fact that the material produced is of higher quality, such as, for example, with a reduced number of folds, because it is subjected to controlled and gradual stresses and forces.

Yet another advantage is due to the fact that the oven-press according to the invention has a longer service life compared with the prior art oven-presses, since it is less subjected to machine stoppages.

## Claims

1. An oven-press of inconsistent material (M), comprising:
- a first (2) treatment unit comprising a plurality (21) of first cylinders (20) configured to compress said material (M) and heating means (22) configured to heat said material (M);
- a second (3) treatment unit comprising a plurality (31) of second cylinders (30) configured to compress said material (M), said plurality (21) of first cylinders and said plurality (31) of second cylinders being placed below and above said material (M), said cylinders (20, 30) placed below said material (M) defining a lower series (SI), and said cylinders (20, 30) placed above said material (M) defining an upper series (SS);
- a first (4) belt moved according to a direction (A) of advancement designed to transfer said material (M) from said first (2) to said second (3) treatment unit, said first (4) belt being closed in a ring around said lower series (SI);
- a second (5) belt moved according to said direction (A) of advancement, said second (5) belt being closed in a ring around said upper series (SS), said first and second cylinders (20, 30) being configured to transmit a driving force (FM) to at least one between said first (4) and said second (5) belt; **characterised in that** said means (22) of heating said first (2) treatment unit comprise a plurality di plates (220) configured to heat at least one between said first (4) and said second (5) belt, said plates (220) being interposed between said first cylinders (20).

2. Oven-press according to claim 1, **characterised in that** said plurality (21) of first cylinders and said plurality (31) of second cylinders are configured to transmit a driving force (FM) to said first (4) and to said second (5) belt.

3. Oven-press according to claim 1, **characterised in that** at least one between said first (4) and said second (5) belt is made of thermally conductive material to allow the transfer of heat from said heating means (22) to said material (M).

4. Oven-press according to claim 1, **characterised in that** said second (3) treatment unit comprises cooling means (32) of said material (M).

5. Oven-press according to claim 4, **characterised in that** said cooling means (32) comprise a plurality (321) of plates (320) configured to cool at least one between said first (4) and said second (5) belt.

6. Oven-press according to any one of claims 1 and 5, **characterised in that** said plates (220, 320) of said heating means (22) and of said cooling means (32) comprise at least one housing (6) to contain fluids chosen between heating and cooling fluids and at least one housing (7) to contain electrical heating elements.

7. Oven-press according to claim 1, **characterised in that** said first (2) treatment unit comprises a first (2A) and a second (2B) sub-unit, said first (2A) and said second (2B) sub-unit being configured to move with respect to each other in such a way that at least one between said first (4) and said second (5) belt undergoes a translation, rotation, or a combination thereof according to a plane orthogonal to said direction (A) of advancement.

8. Oven-press according to claim 1, **characterised in that** at least part of said cylinders (20, 30) of said lower series (SI) and at least part of said cylinders (20, 30) of said upper series (SS) are at least partially offset according to said direction (A) of advancement to increase the compression on said material (M).

9. Oven-press according to any one of claims 1 and 5, **characterised in that** said plates (220, 320) of said heating means (22) and of said cooling means (32) are removable.

10. Oven-press according to any one of claims 1 and 5, wherein said plates (220, 320) have a trapezoidal cross-section.
